(19) **Europäisches Patentamt**

**European Patent Office**

**Office européen des brevets**

(11) Veröffentlichungsnummer: **0 069 229**
**B1**

(12) # EUROPÄISCHE PATENTSCHRIFT

(45) Veröffentlichungstag der Patentschrift:
**07.01.88**

(51) Int. Cl.⁴: **G 06 F 15/42**

(21) Anmeldenummer: **82104571.3**

(22) Anmeldetag: **25.05.82**

(54) **Medizinische Diagnostikeinrichtung.**

(30) Priorität: **30.06.81 US 280055**

(43) Veröffentlichungstag der Anmeldung:
**12.01.83 Patentblatt 83/2**

(45) Bekanntmachung des Hinweises auf die Patenterteilung:
**07.01.88 Patentblatt 88/1**

(84) Benannte Vertragsstaaten:
**DE FR GB**

(56) Entgegenhaltungen:
**GB - A - 2 057 221**

**OPTICAL ENGINEERING, Band 17, Nr. 6, November/Dezember 1978, Seiten 652-657, Bellingham, USA; R.A. KRUGER et al.: "A digital video image processor for real-time X-ray subtraction imaging"**
**ELECTRO MEDICA, Band 49, Nr. 2, vor 4. Juni 1981, Seiten 122-131, Erlangen, DE; A.L. BAERT et al.: "Computerangiographie - Intravenöse Arteriographie"**

(73) Patentinhaber: **Siemens Aktiengesellschaft Berlin und München, Wittelsbacherplatz 2, D-8000 München 2 (DE)**

(72) Erfinder: **Schardt, Mark A., 1135 A Reed Avenue, 94086 Sunnyvale California (US)**

**Beschreibung**

Die Erfindung betrifft eine medizinische Diagnostikeinrichtung gemäss dem Oberbegriff des Patentanspruches 1. Eine derartige Diagnostikeinrichtung dient zur Herstellung von Subtraktionsbildern, die bei Röntgendurchleuchtungen, insbesondere bei der selektiven Angiographie, Verwendung finden, um Blutgefässe, die im normalen Röntgenbild nur schwer zu erkennen sind und von Knochenstrukturen überlagert werden, deutlich sichtbar zu machen.

In dem Artikel «A Digital Video Image Processor for Real-Time X-Ray Subtraction Imaging» von R. A. Kruger et al. aus Optical Engineering, Vol. 17, No. 6, November/Dezember 1978 ist auf den Seiten 652 bis 657 eine Röntgendiagnostikeinrichtung zur Erstellung von Subtraktionsbildern beschrieben, bei der in einem Speicher ein über mehrere Abtastungen gemitteltes Leerbild, d.h. ein Bild ohne Kontrastmittelfüllung, gespeichert wird. Anschliessend wird ein Kontrastmittel injiziert. Die zugehörigen Füllungsbilder werden nun in einem weiteren Bildspeicher über mehrere Abtastungen gemittelt abgespeichert. In der Subtraktionsvorrichtung wird das Leerbild von Füllungsbild subtrahiert, so dass auf einem nachgeschalteten Monitor anschliessend der Verlauf des Kontrastmittels beobachtet werden kann.

Um ein optimales Subtraktionsbild zu erhalten, muss die Maske möglichst dicht vor dem Auftreten des Kontrastmitteleinflusses gesetzt werden, da anderenfalls der Zeitabschnitt zwischen Maske und Füllungsbild zu gross wird, so dass Patientenbewegungen auftreten können und das Subtraktionsbild unbrauchbar würde.

In einer weiteren, in dem Artikel beschriebenen Betriebsart der Röntgendiagnositkeinrichtung werden über mehrere Bilder gemittelte Röntgenbilder alternierend in drei Bildspeichern eingelesen. Während des Einspeichervorganges in einen, beispielsweise den dritten Speicher werden die Ausgänge des zweiten Bildspeichers, in dem das vorhergehende gemittelte Röntgenbild enthalten ist, und des ersten Bildspeichers, in dem das dem Röntgenbild des zweiten Bildspeichers vorhergehende Röntgenbild enthalten ist, mit einer Subtraktionsvorrichtung zur Differenzbildung verbunden. Dadurch werden fortlaufend Subtraktionsbilder wiedergegeben, die aus zeitlich eng beieinanderliegenden Röntgenbildern erstellt werden. Dadurch ist es möglich, Bewegungen beispielsweise durch die Atmung der Untersuchungsperson nahezu vollständig zu eliminieren. Gleichzeitig wird aber auch die Sichtbarkeit und Erkennbarkeit des Kontrastmittels verringert, da von einem Füllungsbild ein kurz vorhergehendes Füllungsbild subtrahiert wird, so dass ein derartiges Verfahren zur Darstellung und Beobachtung eines vollständigen Kontrastmittelverlaufes nicht geeignet ist. Eine Einspeicherung eines Leerbildes, einer Maske, ist nicht möglich, da sämtliche Bildspeicher für dieses Verfahren benötigt werden. Vielmehr dient das derartige Verfahren, wie der Beschreibung zu entnehmen ist, der Erkennbarkeit der Bewegung des Herzens.

Die Erfindung geht von der Aufgabe aus, eine Röntgendiagnostikeinrichtung gemäss dem Oberbegriff des Patentanspruches 1 derart auszubilden, dass eine Einspeicherung der optimalen Maske unmittelbar vor dem Auftreten des Kontrastmittels und der für die Untersuchung benötigten Aufnahmeszenen erfolgt.

Die Aufgabe wird erfindungsgemäss durch die im kennzeichnenden Teil des Patentanspruches 1 angegebenen Merkmale gelöst. Durch die Speicherung der ersten Maske und deren Subtraktion vom beispielsweise aktuellen Röntgenbild lässt sich das Auftreten bereits geringer Mengen des Kontrastmittels leicht beobachten und erkennen. Durch die Betätigung der Schaltvorrichtung wird dann die Einspeicherung der Bilder der Untersuchung gestartet und gleichzeitig eine zweite, optimale Maske ausgewählt und der Subtraktionsvorrichtung zugeführt, die unmittelbar vor dem ersten Untersuchungsbild vollständig eingespeichert wurde.

Das Signal/Rausch-Verhältnis der Bilder lässt sich durch die in den Unteransprüchen angegebenen Merkmale vergrössern.

Die Erfindung ist nachfolgend anhand eines in der Zeichnung dargestellten Ausführungsbeispieles näher erläutert. Es zeigen:

Fig. 1 ein Blockschaltbild einer Röntgendiagnostikeinrichtung nach der Erfindung,

Fig. 2 eine Darstellung zur Erläuterung des Zeitablaufes der Einspeicherung in drei Bildspeicher für die Erzeugung der zweiten Maske,

Fig. 3 ein Blockschaltbild der ersten Speichervorrichtung gemäss Figur 1,

Fig. 4 die Steuereinheit gemäss Figur 3,

Fig. 5 eine Darstellung zur Erläuterung des Zeitablaufes der Einspeicherung in zwei Sätze von Bildspeichern und für die Erzeugung der zweiten Maske,

Fig. 6A und 6B eine detaillierte Ausführung des Teiles der Verarbeitungsschaltung gemäss Figur 1 für die automatische erfindungsgemässe Maskenerzeugung, und

Fig. 7 einen Zeitfolgeplan von hauptsächlichen Steuersignalen der Verarbeitungsschaltung gemäss Figur 6.

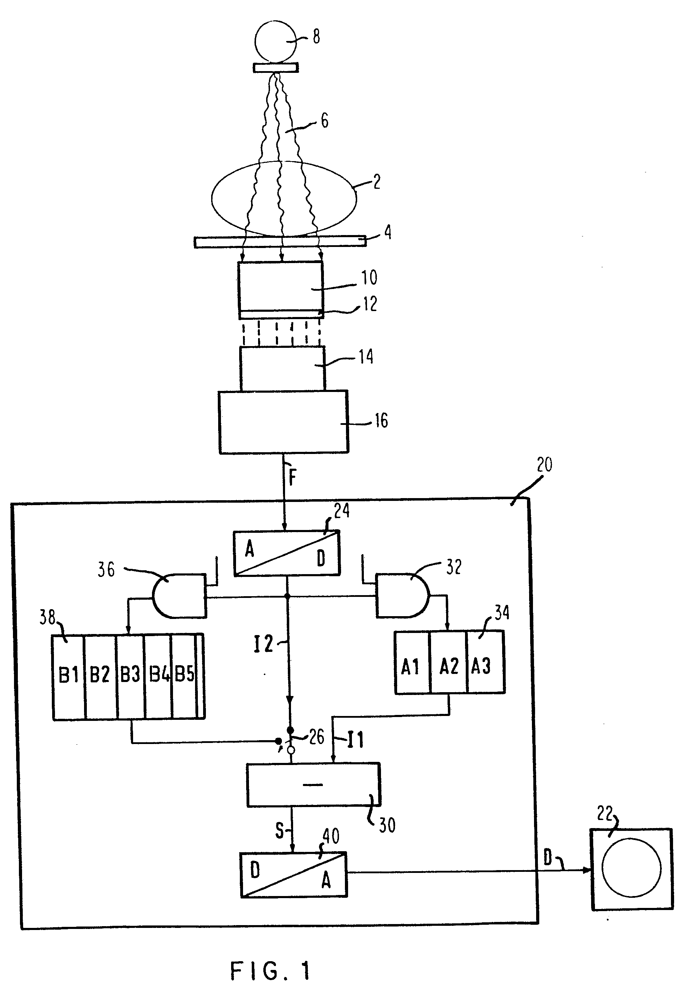

In der Figur 1 ist eine medizinische Diagnostikeinrichtung mit einer Röntgenröhre 8 dargestellt, die Röntgenstrahlen 6 aussendet, die einen auf einer Patientenliege 4 befindlichen Patienten 2 durchdringen und auf den Eingangsleuchtschirm eines Röntgenbildverstärkers 10 ein Strahlenbündel werfen. Das Bild des Ausgangsleuchtschirmes 12 des Röntgenbildverstärkers 10 wird durch eine Optik 14 von einer Fernsehkamera 16 aufgenommen. Die Fernsehkamera 16 erzeugt ein dem Strahlenbild entsprechendes analoges Videosignal F. Das Videosignal F wird einer Verarbeitungsschaltung 20 zugeführt, die aus dem Videosignal F ein analoges Differenzsignal D bildet, das auf einem Monitor 22 dargestellt wird.

Die in Figur 1 dargestellte Verarbeitungsschaltung 20 weist als Eingangsstufe einen Analog/Digital-Wandler (A/D-Wandler 24) auf, dem das analoge Videosignal F zugeführt wird. Das digitale Ausgangssignal des A/D-Wandlers 24 wird als aktuelles Videosignal I2 über einen Umschalter 26 einem ersten Eingang einer Subtraktionsvorrichtung 30 zugeführt.

Das aktuelle Videosignal I2 wird über ein erstes UND-Glied 32 einer ersten digitalen Speichervorrichtung 34 zugeführt. Diese erste Speichervorrichtung 34 enthält drei Bildspeicher A1, A2 und A3 für jeweils ein vollständiges Bild. Die Speichervorrichtung 34 erzeugt ein Referenz-Videosignal I1 (Maske). Das Referenz-Videosignal I1 wird dem zweiten Eingang der Subtraktionsvorrichtung 30 zugeführt.

Das aktuelle Videosignal I2 wird über ein zweites UND-Glied 36 einer zweiten digitalen Speichervorrichtung 38 zugeführt. Diese Speichervorrichtung 38 enthält eine grössere Anzahl von Bildspeichern B1, B2, B3, . . . für jeweils ein vollständiges Bild. Die Speichervorrichtung 38 dient zur Speicherung von Füllungsbildern und ermöglicht einen Wiedergabebetrieb. Sie kann auch ein Teil der Speichervorrichtung 34 sein. Der Ausgang der zweiten Speichervorrichtung 38 ist mit dem anderen Schaltkontakt des Umschalters 26 verbunden. Somit kann entweder das aktuelle Videosignal I2 vom A/D-Wandler 24 oder bei Wiedergabe das gespeicherte Videosignal von der zweiten Speichervorrichtung 38 der Subtraktionsvorrichtung 30 zugeführt werden, die, je nach Stellung des Umschalters 26, bildpunktweise die Intensität des Referenz-Videosignales I1 von der Intensität des aktuellen Videosignales I2 oder des gespeicherten Videosignales subtrahiert. Das digitale Differenzsignal S der Subtraktionsvorrichtung 30 wird einem Digital/Analog-Wandler (D/A-Wandler 40) zugeführt. Das analoge Differenzsignal D wird auf dem Monitor 22 wieder gegeben.

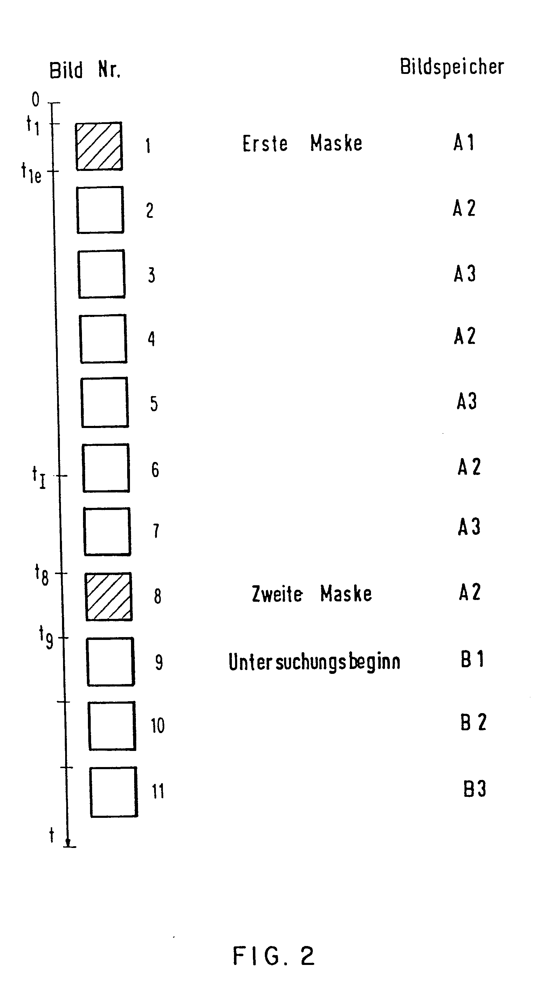

Anhand der Figur 2 wird nun der Speichervorgang in den Speichervorrichtungen 34 und 38 näher erläutert. Das erste Bild Nr. 1 des aktuellen Videosignales I2 wird in den Bildspeicher A1 der ersten digitalen Speichervorrichtung 34 eingelesen. Dieser Speichervorgang dauert von einem Zeitpunkt $t_1$ bis zu einem Zeitpunkt $T_{1e}$. Dieses Bild Nr. 1 entspricht der ersten Maske. Das nächste Bild, Nr. 2, wird in dem zweiten Bildspeicher A2 und das Bild Nr. 3 in dem dritten Bildspeicher A3 eingelesen. Danach ist die Speicherkapazität der ersten Speichervorrichtung 34 erschöpft. Das folgende Bild, Nr. 4, wird wieder in dem zweiten Bildspeicher A2 eingelesen, wobei der Inhalt des Bildspeichers A2 überschrieben wird. Gleichermassen wird das Bild Nr. 5 in den dritten Bildspeicher A3 eingelesen, wobei das darin enthaltene Bild Nr. 3 überschrieben wird. Die folgenden Bilder Nr. 6, 7, . . . werden ebenfalls alternierend in den zwei Bildspeichern A2 und A3 aufgenommen.

Das Kontrastmittel wird zu einem Zeitpunkt $t_i$ injiziert, der vor oder nach dem Startpunkt $t_1$ der Einspeicherung der ersten Maske liegt. Nach der Injektion wird beim Erscheinen des Kontrastmittels im Monitorbild zu einem Zeitpunkt $t_9$ die Untersuchung gestartet. Dieser Zeitpunkt $t_9$ stimmt im Beispiel mit dem Anfang des Bildes Nr. 9 überein.

Ist die Untersuchung gestartet, wird das letzte vollständige Bild in dem Bildspeicher A2 oder A3 als zweite Maske ausgewählt. In dem vorliegenden Beispiel ist das letzte vollständige Bild in dem zweiten Bildspeicher A2 gespeichert, dessen Ausgang mit der Subtraktionsvorrichtung 30 verbunden wird, damit dessen Inhalt als zweite Maske ausgelesen werden kann. Patientenbewegungen, die in dem Zeitabschnitt $(t_8-t_1)$ zwischen den beiden Masken liegen, können sich somit nicht störend in dem Differenzbild auswirken.

Nachdem die Untersuchung gestartet wurde, wird das Bild Nr. 9 in den ersten Bildspeicher B1 der zweiten Speichervorrichtung 38 eingelesen. Die folgenden Bilder Nr. 10, 11, . . . werden in den folgenden Bildspeichern B2, B3, . . . aufgenommen. Während der Einspeicherung in der zweiten Speichervorrichtung 38 befindet sich der Umschalter 26 in der in Figur 1 dargestellten Position.

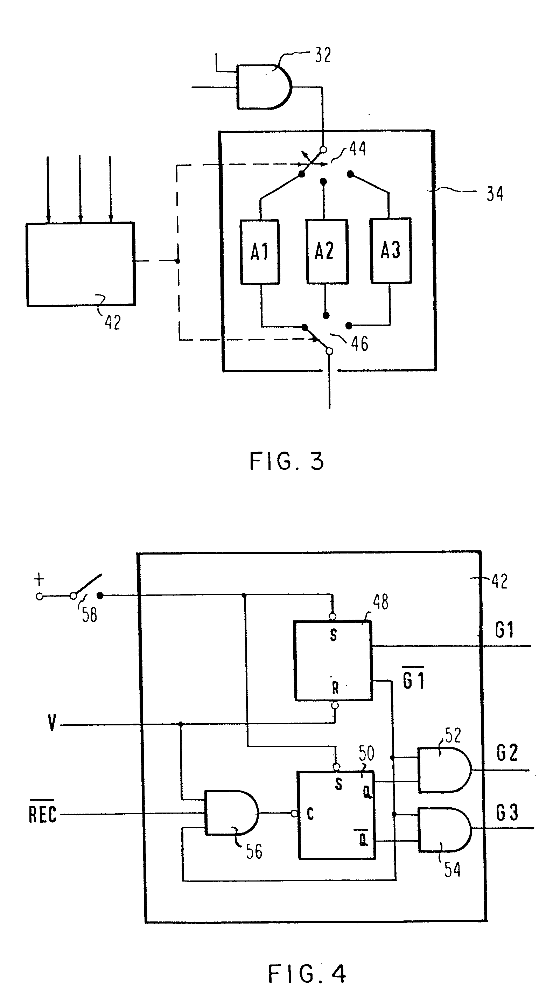

In den Figuren 3 und 4 sind die erste Speichervorrichtung 34 und eine Steuereinheit 42 zur Auswahl der Bildspeicher A1, A2, A3 dieser Speichervorrichtung 34 dargestellt. Die erste Speichervorrichtung 34 enthält einen ersten Schalter 44, der das erste UND-Glied 32 den Eingängen der Bildspeicher A1, A2, A3 nacheinander aufschaltet, und einen zweiten Schalter 46 zum Auslesen der Ausgangsdaten aus einem von diesen drei Bildspeichern A1, A2, A3. Die Schalter 44, 46 werden durch die Steuereinheit 42 angesteuert.

In der Figur 4 ist die Steuereinheit 42 dargestellt, die zwei Flip-Flops 48 und 50 und drei UND-Glieder 52 bis 56 enthält. Um die Steuereinheit 42 zu starten, wird ein Schalter 58 betätigt, der eine Spannungsquelle + mit den Setzeingängen S der Flip-Flops 48 und 50 verbindet. Dadurch werden beide Flip-Flops 48 und 50 gesetzt und das Ausgangssignal G1 geht auf logisch High. Das Signal $\overline{G1}$ befindet sich im Low-Zustand und sperrt die UND-Glieder 52 und 54. Dadurch nimmt der Schalter 44 seine erste, in Figur 3 dargestellte Schaltposition ein.

Die in dem Videosignal F enthaltenen vertikalen Synchronimpulse V werden dem Löscheingang R des Flip-Flops 48 zugeführt. Der nächste Synchronimpuls V löscht das erste Flip-Flop 48, so dass das Signal $\overline{G1}$ in den High-Zustand übergeht und die UND-Glieder 52 und 54 freigegeben werden. Da sich das Ausgangssignal Q des zweiten Flip-Flops 50 noch auf logisch High befindet, geht das Ausgangssignal G2 ebenfalls auf logisch High, so dass der Schalter 44 die zweite Schaltposition einnimmt. Das Signal $\overline{G1}$ gibt ebenfalls das dritte UND-Glied 56 frei, so dass die vertikalen Synchronimpulse V dem Takteingang C des zweiten Flip-Flps 50 zugeführt werden. Der nächste vertikale Synchronimpuls V taktet nun das zweite Flip-Flop 50, so dass das zweite UND-Glied 54 freigegeben und dadurch das Ausgangssignal G3 erzeugt wird, so dass der Schalter 44 seine dritte Schaltposition einnimmt. Die folgenden vertikalen Synchronimpulse V erzeugen alternierend die Ausgangssignale G2 und G3.

Die Schalter 44 und 46 können durch UND-Glieder realisiert werden, denen die Ausgangssignale G1, G2 und G3 zugeführt werden. Das Ausgangssignal G1 bringt die Schalter 44 und 46 in ihre erste Schaltposition, in welcher der Eingang des Bildspeichers A1 mit der ersten UND-Schaltung 32 und der Ausgang des ersten Bildspeichers A1 mit der Subtraktionsvorrichtung 30 verbunden ist. Das Ausgangssignal G2 verbindet in der zweiten Schaltposition den Eingang des zweiten Bildspeichers A2 mit dem UND-Glied 32 und in der dritten Schaltposition (Ausgangssignal G3) ist der Eingang des Bildspeichers A3 mit dem Eingang der ersten Speichervorrichtung 34 verbunden.

Dem dritten UND-Glied 56 wird auch ein invertiertes Aufnahmesignal $\overline{REC}$ zugeführt, das die Untersuchung kennzeichnet und den Speichervorgang in der zweiten Speichervorrichtung 38 bewirkt. Dieses Aufnahmesignal $\overline{REC}$ wird entweder automatisch oder manuell erzeugt, wenn das Kontrastmittel den betrachteten Bereich erreicht. Dieses Aufnahmesignal $\overline{REC}$ sperrt das dritte UND-Glied 56, so dass dem zweiten Flip-Flop 50 keine weiteren vertikalen Synchronimpulse V zugeführt werden.

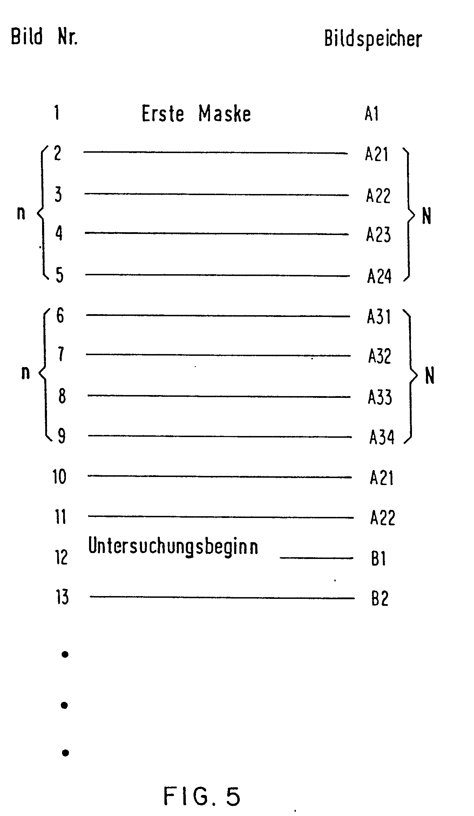

Anhand der Figur 5 wird der Speichervorgang für eine zweite Maske dargestellt, bei dem eine Summation von mehreren aufgenommenen Bildern erfolgt. Wieder wird die erste Maske in den Bildspeicher A1 der ersten Speichervorrichtung 34 eingelesen. Die folgenden Bilder werden alternierend zwischen einem ersten und einem zweiten Satz von Bildspeichern A21 bis A24 und A31 bis A34 aufgenommen. Jeder dieser beiden Sätze A2 und A3 enthält N = 4 Bildspeicher. Zu Beginn der eigentlichen Untersuchung wird der letzte vollständige Satz A2 oder A3 von Bildspeichern identifiziert und deren Inhalte zur Bildung der zweiten Maske addiert.

Ein Zusammenfassen mehrerer Bilder zu einer zweiten Maske kann aber auch bei nicht unterteilten Bildspeichern A2 und A3 erfolgen, wenn die Bildwerte direkt in jedem Bildspeicher A2 und A3 integriert werden. Dazu kann eine beliebige Anzahl n von Bildern zusammmegefasst werden. In ähnlicher Weise kann die erste Maske auch aus einer Summation von n Bildern bestehen. Eine Integration wird durch einfache Addition von n aktuellen Bildern zu dem Inhalt der Bildspeicher A2 und A3 erreicht. Sind in dem Bildspeicher A2 n Bilder aufgenommen, werden die nächsten n Bilder in dem zweiten Bildspeicher A3 summiert. Ist nun der Bildspeicher A3 gefüllt, so wird der Bildspeicher A2 gelöscht und anschliessend werden wieder n Bilder eingelesen. Wenn die Untersuchung beginnt, wird die letzte vollständige Summe von n Bildern als zweite Maske ausgelesen.

Gemäss Figur 5 werden n = vier Bilder in dem zweiten Bildspeicher A2 eingelesen und nachfolgend ebenfalls vier Bilder in dem dritten Bildspeicher A3 eingespeichert. Anschliessend werden beispielsweise noch zwei Bilder (Bilder Nr. 10 und 11) in dem zweiten Bildspeicher A2 eingespeichert, bevor das Aufnahmesignal $\overline{REC}$ zu Beginn der Untersuchung erzeugt wird. Somit ist in dem zweiten Bildspeicher A2 keine vollständige Anzahl n von Bildern eingelesen worden. Die letzte vollständige Summation ist in dem dritten Bildspeicher A3 enthalten und wird als zweite Maske verwendet. Die Untersuchung beginnt mit dem Bild Nr. 12, das in dem ersten Bildspeicher B1 der zweiten Speichervorrichtung 38 gespeichert ist.

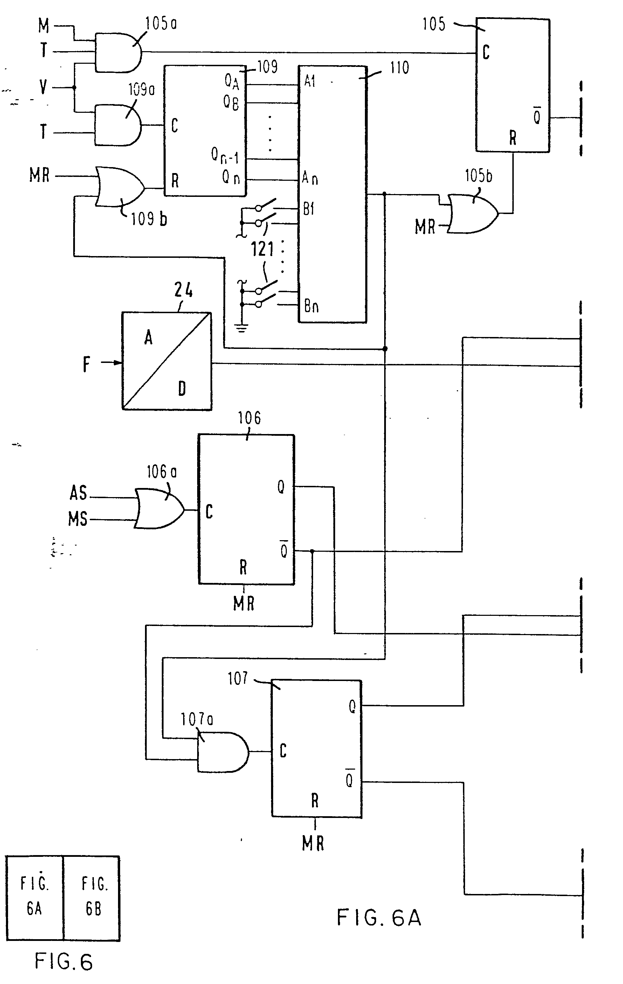

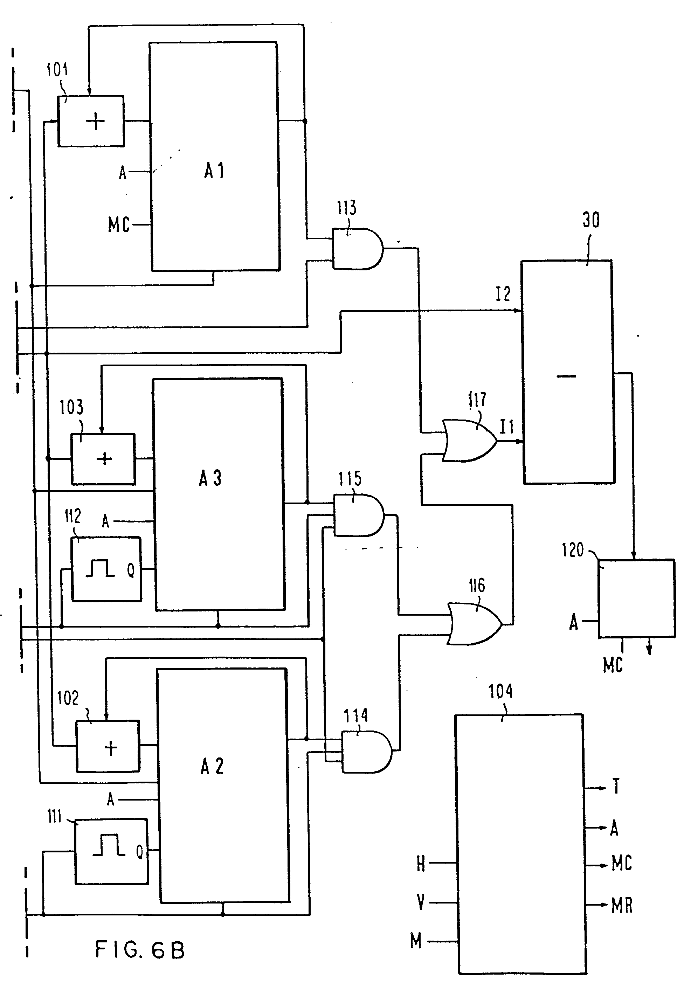

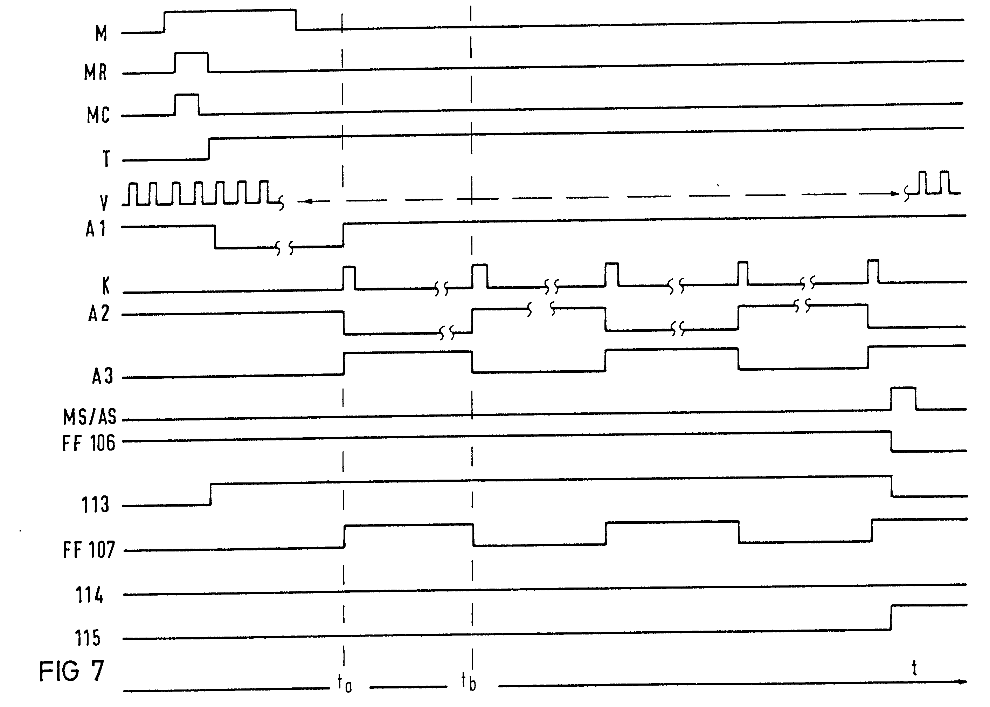

In den Figuren 6A und 6B ist eine Ausführungsform der ersten Speichervorrichtung 34 mit einer Steuereinheit 42 für die automatische Erzeugung einer zweiten Maske mit Integration des Bildsignales in den Bildspeichern A1 bis A3 dargestellt. Die Figuren 6A und 6B gehören, wie in Figur 6 gezeigt, zusammen. In der Figur 7 ist die Zeitfolge der Signale der Steuereinheit der Figur 6 dargestellt.

Die erste Speichervorrichtung 34 enthält drei Bildspeicher A1 bis A3. Um ein Summenvideosignal zu erhalten, ist jeder Dateneingang der Bildspeicher A1 bis A3 mit je einer Additionsstufe 101 bis 103 verbunden, deren Eingängen das aktuelle Videosignal I2 des A/D-Wandlers 24 und das Ausgangssignal der entsprechenden Bildspeicher A1 bis A3 zugeführt werden.

Die Steuereinheit 42 zur Erzeugung der beiden Masken enthält eine Steuerlogik 104, drei Flip-Flops 105 bis 107, deren Takteingänge C durch ein UND-Glied 105a, ein ODER-Glied 106a und ein UND-Glied 107a geschaltet werden. Die Steuereinheit 42 enthält auch einen Zähler 109, dessen Takteingang C durch ein UND-Glied 109a und dessen Löscheingang R durch ein ODER-Glied 109b freigegeben werden. Der Ausgang des Zählers 109 ist mit einem Komparator 110 verbunden, dessen Ausgang über ein ODER-Glied 105b an dem Löscheingang R des ersten Flip-Flops 105 angeschlossen ist. Der Ausgang des Komparators 110 ist auch über das ODER-Glied 109b am Löscheingang R des Zählers 109 und über das UND-Glied 107a am Takteingang C des dritten Flip-Flops 107 angeschlossen. Die Steuereinheit 42 enthält weiterhin zwei monostabile Kippstufen 111 und 112 zur Löschung der beiden Bildspeicher A2 und A3. Die beiden Kippstufen 111 und 112 sind an den Ausgängen Q und $\overline{Q}$ des Flip-Flops 107 angeschlossen. Die Datenausgänge der Bildspeicher A1 bis A3 sind mit drei UND-Gliedern 113 bis 115 verbunden.

Die Ausgänge der UND-Glieder 114 und 115 sind mit den Eingängen eines ODER-Gliedes 116 verbunden. Der Ausgang des UND-Gliedes 113 und der des ODER-Gliedes 116 sind an einem weiteren ODER-Glied 117 angeschlossen. Das Ausgangssignal des ODER-Gliedes 117 wird als Referenz-Videosignal I1 und das Ausgangssignal des A/D-Wandlers 24 wird als aktuelles Videosignal I2 der Subtraktionsvorrichtung 30 zugeführt, die über einen Monitorspeicher 120, beispielsweise ein RAM, an dem Monitor 22 angeschlossen ist.

Anhand der Figur 7 wird nun der Ablauf der Vorrichtung gemäss Figur 6 näher erläutert. Die Untersuchung wird durch ein Maskensignal M für die Aufnahme einer ersten Maske gestartet. Dieses Maskensignal M wird der Steuerlogik 104 und dem UND-Glied 105a zugeführt. Beim Auftreten dieses Maskensignales M erzeugt die Steuerlogik 104 ein Signal «Master-Reset» MR, ein Signal «Memory-Clear» MC und anschliessend ein Signal «Taktfreigabe» T. Diese Signale leitet die Steuerlogik 104 aus den in dem Videosignal F enthaltenen horizontalen und vertikalan Synchronimpulsen H und V ab. Sie werden zur Auswahl der Adressenleitungen A gebraucht. Das Signal «Master-Reset» MR wird über das ODER-Glied 105b dem Löscheingang R des ersten Flip-Flops 105, über das ODER-Glied 109b dem Löscheingang des Zählers 109 und direkt den Löscheingängen R der beiden anderen Flip-Flops 106 und 107 zugeführt.

Bei Übereinstimmung zwischen dem Maskensignal M, dem Signal «Taktfreigabe» T und den vertikalen Synchronimpulsen V an dem UND-Glied 105a wird das erste Flip-Flop 105 getaktet. Das Ausgangssignal $\overline{Q}$ des Flip-Flops 105 gibt die Bildspeicher A2 und A3 frei und schaltet den ersten Bildspeicher A1 auf Speicherbetrieb. Somit wird das digitalisierte Videosignal F des A/D-Wandlers 24 der Additionsstufe 101 des ersten Bildspeichers A1 zugeführt.

Mit jedem vertikalen Synchronimpuls V wird der Zählerstand des Zählers 109 erhöht. Der Komparator 110 vergleicht den gegenwärtigen Zählerstand mit einer, beispielsweise durch Schalter 121, vorgewählten Anzahl n von Bildern, die summiert werden soll. Ist die vorgeschriebene Anzahl n der Bilder in den ersten Bildspeicher A1 summiert worden, wird zu einem Zeitpunkt $t_a$ ein Komparatorimpuls K erzeugt, der das erste Flip-Flop 105 und den Zähler 109 zurücksetzt. Dadurch wird der erste Bildspeicher A1 zum Lesen freigegeben. Gleichzeitig taktet der Komparatorimpuls K das dritte Flip-Flop 107, das den zweiten Bildspeicher A2 über die monostabile Kippstufe 111 löscht und anschliessend auf Speicherbetrieb umschaltet, so dass die digitalisierten Videosignale F über die Additionsstufe 102 eingelesen und summiert werden können. Gleichzeitig wird der dritte Bildspeicher A3 auf Lesebetrieb geschaltet. Die Funktionen dieser beiden Bildspeicher A2 und A3 sind immer entgegengesetzt.

Die Videosignale F werden ebenfalls in dem zweiten Bildspeicher A2 summiert, bis die vorgeschriebene Anzahl n von Bildern durch den Komparator 110 erkannt wurde. Zu diesem Zeitpunkt $t_b$ taktet der Komparatorimpuls K das dritte Flip-Flop 107, so dass der dritte Bildspeicher A3 durch die monostabile Kippstufe 112 gelöscht und anschliessend auf Speicherbetrieb umgeschaltet wird. Ist in dem dritten Bildspeicher A3 die vorgewählte Anzahl n von Bildern eingelesen, taktet der Komparatorimpuls K wiederum das dritte Flip-Flop 107, so dass die Daten alternierend in die zwei Bildspeicher A2 und A3 eingelesen werden.

Dem ODER-Glied 106a kann entweder ein manuelles Startsignal MS oder ein automatisches Startsignal AS zugeführt werden. Durch eines dieser Signale wird das zweite Flip-Flop 106 getaktet. Da die UND-Glieder 107a und 113 an dem Ausgang $\overline{Q}$ des zweiten Flip-Flops 106 angeschlossen sind, werden die UND-Glieder gesperrt, so dass dem dritten Flip-Flop 107 keine Taktimpulse mehr zugeführt werden. Somit werden die Lese- oder Schreibfunktionen der Bildspeicher A2 und A3 festgehalten. Gleichzeitig werden die an dem Ausgang Q des zweiten Flip-Flops 106 angeschlossenen UND-Glieder 114 und 115 freigegeben, so dass in Abhängigkeit von den Ausgangszuständen des dritten Flip-Flops 107 einer der Bildspeicher A2 oder A3 mit der Subtraktionsvorrichtung 30 verbunden ist. Somit ist der letzte vollständige Satz von Bildern für die Verarbeitung durch die Subtraktionsvorrichtung 30 ausgewählt.

In der Subtraktionsvorrichtung 30 wird eine Subtraktion der ersten Maske (von dem ersten Bildspeicher A1 über das UND-Glied 113 und das ODER-Glied 117) oder der zweiten Maske (von dem zweiten oder dritten Bildspeicher A2 oder A3 über das UND-Glied 114 oder 115, das ODER-Glied 116 und das ODER-Glied 117) von dem aktuellen Videosignal I2 durchgeführt. Das Differenzsignal, das in der Subtraktionsvorrichtung 30 gebildet wird, wird in den Monitorspeicher 120 zur Anzeige durch den damit verbundenen Monitor 22 eingelesen.

## Patentansprüche

1. Medizinische Diagnostikeinrichtung mit einer Strahlenquelle (8), mit einem Strahlendetektor (10, 12), mit einer Fernsehaufnahmevorrichtung (14, 16), mit einer Verarbeitungsschaltung (20), die Speichervorrichtungen (34, 38), eine Steuereinheit (42) für die zeitlichen Abläufe der Verarbeitungsschaltung (20), eine Subtraktionsvorrichtung (30) und eine Schaltvorrichtung (44, 46) für die Speichervorgänge aufweist, wobei in einer Speichervorrichtung (34) ein Videosignal eines ersten, einer Maske entsprechenden Bildes gespeichert wird, und die Subtraktionsvorrichtung (30) ein Differenzsignal aus einem zu einem früheren Zeitpunkt gespeicherten und einem später auftretenden Videosignal bildet, und mit einem Monitor (22), dadurch gekennzeichnet, dass zwei Speichervorrichtungen (34, 38) vorhanden sind, wobei die erste Speichervorrichtung (34) drei Bildspeicher (A1 bis A3) aufweist, dass die Steuereinheit (42) derart ausgebildet ist, dass in dem ersten Bildspeicher (A1) ein erstes Bild als Maske aufgenommen wird, dass in den weiteren Bildspeichern (A2 und A3) der ersten Speichervorrichtung (34) alternierend die folgenden Bilder eingelesen werden, und dass die Schaltvorrichtung (26, 44, 46) derart ausgebildet ist, dass sie den Ausgang des ersten Bildspeichers (A1) mit einem Eingang der Subtraktionsvorrichtung (34) verbindet und dass sie nach einem Schaltvorgang eine Einspeicherung der dem Schaltvorgang folgenden Videosignale in der zweiten Speichervorrichtung (38) bewirkt und den Ausgang desjenigen Bildspeichers (A2 oder A3) der ersten Speichervorrichtung (34), in dem das letzte vollständig eingespeicherte Bild enthalten ist, mit dem einen Eingang der Subtraktionsvorrichtung (30) verbindet.

2. Diagnostikeinrichtung nach Anspruch 1, dadurch gekennzeichnet, dass den Bildspeichern (A1 bis A3) Additionsstufen (101 bis 103) zugeordnet sind, die eine Summierung einer vorbestimmten Anzahl n von Bildern ermöglichen.

3. Diagnostikeinrichtung nach Anspruch 2, dadurch gekennzeichnet, dass die Bildspeicher (A2 und A3) Speicherplätze für eine Anzahl n von vollständigen Bildern aufweisen, in die aufeinanderfolgende Bilder eingelesen werden, und die mit den Additionsstufen (101 bis 103) verbunden sind.

4. Diagnostikeinrichtung nach Anspruch 2, dadurch gekennzeichnet, dass die Additionsstufen (101 bis 103) mit den Bildspeichern (A1 bis A3) derart verbunden sind, dass sie eine Summierung einer Anzahl n von Bildern entsprechend einer Integration in den Bildspeichern ermöglichen.

## Claims

1. A medical diagnostic device comprising a radiation source (8), a radiation detector (10, 12), a television recording device (14, 16), a processing circuit (20), which includes storage devices (34, 38), a control unit (42) for the timed operating sequences of the processing circuit (20), a subtraction device (30), and a switching device (44, 46) for the storage procedures, where a video-signal of a first image, corresponding to a mask, is stored in a storage device (34) and the subtraction device (30) forums a difference signal between a video-signal stored at an earlier time and video-signal occurring at a later time, and comprising a monitor (22), characterised in that two storage devices (34, 38) are provided, where the first storage device (34) includes three image stores (A1 to A3), that the control unit (42) is designed to be such that a first image is recorded, as mask, in the first image store (A1), that the following images are alternately input into the further image stores (A2 and A3) of the first storage device (34), and that the switching device (26, 44, 46) is designed to be such that it connects the output of the first image store (A1) to an input of the subtraction device (34), and that following a switching procedure it inputs the video-signals which follow the switching procedure into the second storage device (38) and connects the first input of the subtraction device (30) to the output of the image store (A2 or A3) of the first storage device (34) which contains the last, completely stored image.

2. A diagnostic device as claimed in claim 1, characterised in that the image stores (A1 to A3) are assigned addition stages (101 to 103) which enable the addition of a predetermined number n of images.

3. A diagnostic device as claimed in claim 2, characterised in that the image stores (A2 and A3) include storage positions for a number n of complete images, into which storage positions consecutive images are input and which are connected to the addition stages (101 to 103).

4. A diagnostic device as claimed in claim 2, characterised in that the addition stages (101 to 103) are connected to the image stores (A1 to A3) in such manner that they enable the addition of a number n of images in accordance with an integration in the image stores.

## Revendications

1. Dispositif de diagnostic médical comportant une source de rayonnement (8), un détecteur de rayonnement (10, 12), un dispositif (14, 16) de prise de vues de télévision, un circuit de traitement (20), qui comporte des dispositifs de mémoire (34, 38) et une unité de commande (42) pour les cycles temporels du circuit de traitement (20), et un dispositif soustracteur (30) et un dispositif de commutation (44, 46) pour les opérations de mémoire, et dans lequel un signal vidéo d'une première image correspondant à un masque est mémorisée dans un dispositif de mémoire (34, 38) et le dispositif soustracteur (30) forme un signal de différence à partir d'un signal vidéo mémorisé à un instant antérieur et d'un signal vidéo apparaissant ultérieurement, et comportant un moniteur (29), caractérisé par le fait qu'il est prévu deux dispositifs de mémoire (34, 38), dont le premier (34) comporte trois mémoires d'images (A1 à A3), que l'unité de commande (42) est agencée de telle sorte qu'une première image est enregistrée en tant que masque dans la première mémoire d'images (A1), qu'en alternance les images suivantes sont enregistrées dans les autres mémoires d'images (A2 et A3) du premier dispositif de mémoire (34), et que le dispositif de commutation (26, 44, 46) est agencé de telle sorte qu'il relie la sortie de la première mémoire d'images (A1) à l'entrée du dispositif soustracteur (34) et qu'il réalise, après une opération de commutation, une mémorisation des signaux vidéo, qui succèdent à l'opération de commutation, dans le second dispositif de mémoire (38), et relie la sortie de la mémoire d'images (A2 ou A3) du premier dispositif de mémoire (34), qui contient la dernière image mémorisée complètement, à une entrée du dispositif soustracteur (30).

2. Dispositif de diagnostic suivant la revendication 1, caractérisé par le fait qu'aux mémoires d'images (A1 à A3) se trouvent associés des étages additionneurs (101 à 103), qui permettent une sommation d'un nombre prédéterminé n d'images.

3. Dispositif de radiodiagnostic suivant la revendication 2, caractérisé par le fait que les mémoires d'images (A2 et A3) comportent des plages de mémoire qui sont prévues pour un nombre n d'images complètes et dans lesquelles des images successives sont enregistrées et qui sont reliées aux étages additionneurs (101 à 103).

4. Dispositif de diagnostic suivant la revendication 2, caractérisé par le fait que les étages additionneurs (101 à 103) sont reliés aux mémoires d'images (A1 à A3) de telle sorte qu'elles permettent une addition d'un nombre n d'images conformément à une intégration dans les mémoires d'images.

FIG. 1

Bild Nr.                                    Bildspeicher

0

t₁                  1          Erste   Maske              A 1

t₁ₑ

                    2                                     A 2

                    3                                     A 3

                    4                                     A 2

                    5                                     A 3

t_I                 6                                     A 2

                    7                                     A 3

t₈                  8          Zweite   Maske             A 2

t₉                  9     Untersuchungsbeginn             B 1

                    10                                    B 2

                    11                                    B3

t


FIG. 2


9

FIG. 3

FIG. 4

Bild Nr.                                    Bildspeicher

1              Erste Maske              A1

2  ——————————————————  A21

3  ——————————————————  A22

n                                            N

4  ——————————————————  A23

5  ——————————————————  A24

6  ——————————————————  A31

7  ——————————————————  A32

n                                            N

8  ——————————————————  A33

9  ——————————————————  A34

10  —————————————————  A21

11  —————————————————  A22

12     Untersuchungsbeginn  ———  B1

13  —————————————————  B2

•

•

•

FIG. 5

FIG. 6A

| FIG. 6A | FIG. 6B |

FIG. 6

FIG. 6 B

FIG 7